(19) Europäisches Patentamt
European Patent Office
Office européen des brevets

(11) EP 1 615 055 A2

(12) EUROPEAN PATENT APPLICATION

(43) Date of publication:
**11.01.2006 Bulletin 2006/02**

(51) Int Cl.:
***G02B 5/30*** *(2006.01)*

(21) Application number: **05012358.7**

(22) Date of filing: **08.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **05.07.2004 JP 2004198441**
**24.11.2004 JP 2004338564**
**13.04.2005 JP 2005115258**

(71) Applicant: **NITTO DENKO CORPORATION**
**Ibaraki-shi, Osaka 567-8680 (JP)**

(72) Inventors:
- **Kawamoto, Ikuo**
**Ibaraki**
**Osaka 567-8680 (JP)**
- **Kamijou, Takashi**
**Ibaraki**
**Osaka 567-8680 (JP)**
- **Umemoto, Seiji**
**Ibaraki**
**Osaka 567-8680 (JP)**

(74) Representative: **Schäfer, Matthias W.**
**Patentanwalt**
**Schwanseestrasse 43**
**81549 München (DE)**

# (54) Method of producing elliptically polarizing plate and image display using the ellipticallly polarizing plate

(57) The present invention provides: a method of producing a broadband and wide viewing angle elliptically polarizing plate having excellent characteristics in an oblique direction as well; and an image display using the elliptically polarizing plate obtained through the method. The method of producing an elliptically polarizing plate according to the present invention includes the steps of: subjecting a surface of a transparent protective film to alignment treatment; forming a first birefringent layer by applying a liquid crystal composition onto the surface of the transparent protective film subjected to the alignment treatment; laminating a polarizer on a surface of the transparent protective film opposite to the surface subjected to the alignment treatment; and forming a second birefringent layer by laminating a polymer film on a surface of the first birefringent layer, in which the elliptically polarizing plate has a relationship represented by the following expression (1)

$$2\alpha + 40° < \beta < 2\alpha + 50°$$

in the expression (1), $\alpha$ represents an angle between an absorption axis of the polarizer and an alignment direction of the transparent protective film, and $\beta$ represents an angle between the absorption axis of the polarizer and a slow axis of the second birefringent layer.

FIG. 1

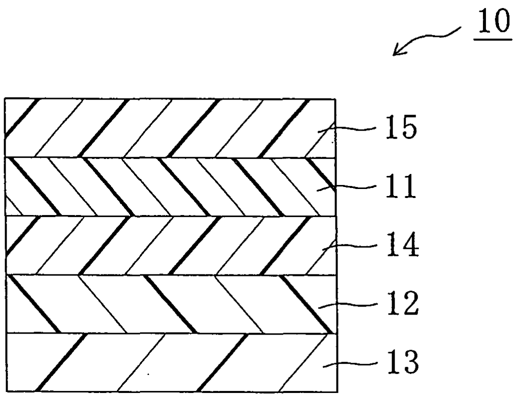




Printed by Jouve, 75001 PARIS (FR)

## Description

### BACKGROUND OF THE INVENTION

1. Field of the Invention

The present invention relates to an elliptically polarizing plate, and to an image display using the same. The present invention more specifically relates to a method of producing a broadband and wide viewing angle elliptically polarizing plate having excellent characteristics in an oblique direction as well at very high efficiency, to an elliptically polarizing plate obtained through the method, and to an image display using the elliptically polarizing plate.

2. Description of the Related Art

Various optical films each having a polarizing film and a retardation plate in combination are generally used for various image displays such as a liquid crystal display and an electroluminescence (EL) display, to thereby obtain optical compensation.

In general, a circularly polarizing plate which is one type of optical films can be produced by combining a polarizing film and a quarter wavelength plate (hereinafter, referred to as a λ/4 plate). However,the λ/4 plate has characteristics providing larger retardation values with shorter wavelengths, so-called "positive wavelength dispersion characteristics", and the λ/4 plate generally has high positive wavelength dispersion characteristics. Thus, the A/4 plate has a problem in that it cannot exhibit desired optical characteristics (such as functions of the λ/4 plate) over a wide wavelength range. In order to avoid the problem, there has been recently proposed a retardation plate having wavelength dispersion characteristics providing larger retardation values with longer wavelengths, so-called "reverse dispersion characteristics" such as a modified cellulose-based film or a modifiedpolycarbonate-based film. However, such a film has problems in cost.

At present, a λ/4 plate having positive wavelength dispersion characteristics is combined with a retardation plate providing larger retardation values with longer wavelengths or a half wavelengthplate (hereinafter, referred to as a λ/2 plate), to thereby correct the wavelength dispersion characteristics of the λ/4 plate (see JP 3174367 B, for example).

In a case where a polarizing film, a λ/4 plate, and a λ/2 are combined as described above, angles of respective optical axes, that is, angles between an absorption axis of the polarizing film and slow axes of the respective retardation plates must be adjusted. However, the optical axes of the polarizing film and the retardation plates each formed of a stretched film generally vary depending on stretching directions. The respective films must be cut out in accordance with directions of the respective optical axes and laminated, to thereby laminate the films such that the absorption axis and the slow axes are at desired angles. More specifically, an absorption axis of a polarizing film is generally in parallel with its stretching direction, and a slow axis of a retardation plate is also in parallel with its stretching direction. Thus, for lamination of the polarizing film and the retardation plate at an angle between the absorption axis and the slow axis of 45°, for example, one of the films must be cut out in a direction of 45° with respect to a longitudinal direction (stretching direction) of the film. In the case where a film is cut out and then attached as described above, angles between optical axes may vary with respect to every cut-out film, for example, which may result in problems of variation in quality with respect to every product and production requiring high cost and long time. Further problems include increased waste by cutting out of the films, and difficulties in production of large films.

As a countermeasure to the problems, there is proposed a method of adjusting a stretching direction by stretching a polarizing film or a retardation plate in an oblique direction or the like (see JP 2003-195037 A, for example). However, the method has a problem in that the adjustment involves difficulties.

Further, at present, an angle between an absorption axis of a polarizing film and a slow axis of each retardation plate is adjusted with respect to every product, and comprehensive means for optimization of the angle has not been found yet.

### SUMMARY OF THE INVENTION

The present invention has been made in view of solving the conventional problems as described above, and an obj ect of the present invention is therefore to provide: a method of producing a broadband, wide viewing angle, and thin elliptically polarizing plate having excellent characteristics in an oblique direction as well at very high efficiency; an elliptically polarizing plate obtained through the method; and an image display using the elliptically polarizing plate.

The inventors of the present invention have conducted extensive studies on a relationship among an absorption axis of a polarizer and slow axes of a λ/4 plate and a λ/2 plate, and have found that excellent broadband and wide viewing angle characteristics can be obtained when angle between the absorption axis and the respective slow axes are in a specific relationship, to thereby complete the present invention.

A method of producing an elliptically polarizing plate according to an embodiment of the present invention

includes the steps of: subjecting a surface of a transparent protective film to alignment treatment; applying a liquid crystal composition onto the surface of the transparent protective film subjected to the alignment treatment; aligning a liquid crystal material in the liquid crystal composition in accordance with an alignment direction of the transparent protective film, so as to form a first birefringent layer; laminating a polarizer on a surface of the transparent protective film opposite to the surface subjected to the alignment treatment; and laminating a polymer film on a surface of the first birefringent layer, so as to form a second birefringent layer, in which the elliptically polarizing plate has a relationship represented by the following expression (1)

$$2\alpha + 40° < \beta < 2\alpha + 50° \quad \cdots (1)$$

in the expression (1) , $\alpha$ represents an angle between an absorption axis of the polarizer and the alignment direction of the transparent protective film, and $\beta$ represents an angle between the absorption axis of the polarizer and a slow axis of the second birefringent layer.

In one embodiment of the present invention, both the polarizer and the transparent protective film having the first birefringent layer formed thereon are continuous films, and long sides of the polarizer and the transparent protective film are continuously attached together in the step of laminating a polarizer.

In another embodiment of the present invention: the polymer film forming the second birefringent layer is a continuous film; and long sides of the polarizer, the transparent protective film having the first birefringent layer formed thereon, and the polymer film are continuously attached together in the step of forming a second birefringent layer.

In still another embodiment of the present invention, the first birefringent layer and the second birefringent layer are attached together through an adhesive layer.

In still another embodiment of the present invention, the alignment treatment is performed in one direction of +8° to +38° and -8° to -38° with respect to the absorption axis of the polarizer.

In still another embodiment of the present invention, the alignment treatment is at least one selected from the group consisting of rubbing treatment, oblique deposition method, stretching treatment, optical alignment treatment, magnetic field alignment treatment, and electric field alignment treatment.

Instill another embodiment of the present invention: alignment treatment is rubbing treatment; and the rubbing treatment is performed directly on the surface of the transparent protective film.

In still another embodiment of the present invention, the liquid crystal composition contains at least one of a liquid crystal monomer and a liquid crystal polymer.

In still another embodiment of the present invention: the liquid crystal composition further contains at least one of a polymerizable monomer and a crosslinkable monomer; and the step of aligning a liquid crystal material further includes at least one of polymerization treatment and crosslinking treatment.

In still another embodiment of the present invention, the liquid crystal composition further contains at least one of a polymerization initiator and a crosslinking agent.

In still another embodiment of the present invention, at least one of the polymerization treatment and the crosslinking treatment is performed by one of heating and photoirradiation.

In still another embodiment of the present invention, the first birefringent layer is a $\lambda/2$ plate. In still another embodiment of the present invention, the first birefringent layer has an in-plane retardation of 180 to 300 nm. In still another embodiment of the present invention, the second birefringent layer is a $\lambda/4$ plate. In still another embodiment of the present invention, the second birefringent layer has an in-plane retardation of 90 to 180 nm.

In still another embodiment of the present invention, the polymer film is a stretched film. In still another embodiment of the present invention, the polymer film is stretched in a stretching direction substantially perpendicular to the absorption axis of the polarizer.

In still another embodiment of the present invention, the transparent protective film contains at least one polymer selected from the group consisting of a cellulose-based resin, a polyimide-based resin, a polyvinyl alcohol-based resin, and a glassy polymer.

According to another aspect of the present invention, an elliptically polarizing plate is provided. The elliptically polarizing plate is produced through the above-described production method. In one embodiment of the present invention, the elliptically polarizing plate further includes another optical layer.

According to still another aspect of the present invention, an image display is provided. The image display includes the above-described elliptically polarizing plate. In one embodiment of the present invention, the elliptically polarizing plate is arranged on a viewer side.

As described above, according to the present invention, the slow axis of the first birefringent layer can be set in any desired directions in the alignment treatment for the transparent protective film, and thus a continuous polarizing film (polarizer) stretched in a longitudinal direction (that is, a film having an absorption axis in a longitudinal direction)

can be used. In other words, a continuous transparent protective film which has been subjected to the alignment treatment at a predetermined angle with respect to its longitudinal direction and a continuous polarizing film (polarizer) may be continuously attached together while the respective longitudinal directions being arranged in the same direction (by so-called roll to roll). Thus, an elliptically polarizing plate can be obtained at very high production efficiency. According to the method of the present invention, the transparent protective film or the polarizer need not be cut out obliquely with respect to its longitudinal direction (stretching direction) for lamination. As a result, angles of optical axes do not vary with respect to every cut-out film, resulting in an elliptically polarizing film without variation in quality with respect to every product. Further, no wastes are produced by cutting of the film, and the elliptically polarizing plate can be obtained at low cost and production of a large polarizing plate is facilitated. Furthermore, according to an embodiment of the present invention, a polymer film stretched in a width direction and having a slow axis in the width direction is used as the polymer film forming the second birefringent layer. Thus, long sides of the polarizer and the polymer film may be continuously attached together, and an elliptically polarizing plate can be obtained at very high production efficiency. The thus-obtained elliptically polarizing plate is optimized to have angles $\alpha$ and $\beta$ in a relationship represented by an expression $2\alpha + 40° < \beta < 2\alpha + 50°$ (wherein, $\alpha$ represents an angle between an absorption axis of the polarizer and the slow axis of the first birefringent layer ($\lambda/2$ plate), and $\beta$ represents an angle between the absorption axis of the polarizer and the slow axis of the secondbirefringent layer ($\lambda/4$plate)), to therebyprovide an image display with broadband and wide viewing angle. The relationship is comprehensive, and requires no studies on lamination direction depending on products by trial and error. That is, the relationshipmaybe used for almost all combinations of the polarizer, $\lambda/2$ plate, and $\lambda/4$ plate, to thereby realize excellent circular polarization characteristics. As a result, optimization of the circular polarization characteristics can be generalized and facilitated.

## BRIEF DESCRIPTION OF THE DRAWINGS

In the accompanying drawings:

FIG. **1** is a schematic sectional view of an elliptically polarizing plate according to a preferred embodiment of the present invention;
FIG. **2** is an exploded perspective view of an elliptically polarizing plate according to a preferred embodiment of the present invention;
FIG. **3** is a perspective view showing a step in an example of a method of producing an elliptically polarizing plate according to the present invention;
FIGS. **4A** and **4B** are each a perspective view showing another step in the example of amethodof producing an ellipticallypolarizing plate according to the present invention;
FIG. **5** is a schematic view showing still another step in the example of a method of producing an elliptically polarizing plate according to the present invention;
FIG. **6** is a schematic view showing yet another step in the example of a method of producing an elliptically polarizing plate according to the present invention;
FIGS. **7A** and **7B** are each a schematic view showing still yet another step in the example of a method of producing an elliptically polarizing plate according to the present invention; and
FIG. **8** is a schematic sectional view of a liquid crystal panel used for a liquid crystal display according to a preferred embodiment of the present invention.

## DESCRIPTION OF THE PREFERRED EMBODIMENTS

### A. Elliptically polarizing plate

#### A-1. Entire constitution of elliptically polarizing plate

FIG. **1** shows a schematic sectional view of an elliptically polarizing plate according to a preferred embodiment of the present invention. An elliptically polarizing plate **10** includes a polarizer **11,** a first birefringent layer **12,** and a second birefringent layer **13** in this order. As required, a first protective layer **14** is provided between the polarizer **11** and the first birefringent layer **12,** and a second protective layer **15** is provided on the opposite side to the first protective layer **14** of the polarizer.

The first birefringent layer **12** may serve as a so-called $\lambda/2$ plate. In the specification of the present invention, the $\lambda/2$ plate refers to a retardation plate having a function of converting linearly polarized light having a specific vibration direction into linearly polarized light having a vibration direction perpendicular thereto, or converting right-handed circularly polarized light into left-handed circularly polarized light (or converting left-handed circularly polarized light into right-handed circularly polarized light) . The second birefringent layer **13** may serve as a so-called $\lambda/4$ plate. In the specification

of the present invention, the λ/4 plate refers to a retardation plate having a function of converting linearly polarized light having a specific wavelength into circularly polarized light (or converting circularly polarized light into linearly polarized light).

FIG. **2** is an exploded perspective view illustrating optical axes of respective layers constituting an elliptically polarizing plate according to the preferred embodiment of the present invention (In FIG. **2,** the second protective layer **15** is omitted for clarity). The first birefringent layer **12** is laminated such that its slow axis B is at a predetermined angle α with respect to an absorption axis **A** of the polarizer **11.** The second birefringent layer **13** is laminated such that its slow axis **C** is at a predetermined angle β with respect to the absorption axis **A** of the polarizer **11.** The slow axis is in a direction providing a maximum in-plane refractive index.

In the present invention, the angles α and β are in a relationship represented by the following expression (1).

$$2\alpha + 40° < \beta < 2\alpha + 50° \quad \cdots (1)$$

The relationship between the angles α and β is more preferably 2α + 42° < β < 2α + 48°, especially preferably 2α + 43° < β < 2α + 47°, and most preferably β = 2α + 45°. The angles α and β in such a relationship provides a polarizing plate having excellent circular polarization characteristics. In addition, the relationship is comprehensive, and requires no studies on lamination direction depending on products by trial and error. That is, the relationship may be used for almost all combinations of the polarizer, λ/2 plate, and λ/4 plate, to thereby realize excellent circular polarization characteristics. Finding of such a relationship is one of features of the present invention, and is a very useful accomplishment in a technical field relating to optimization of circular polarization characteristics.

The angle α is preferably +8° to +38° or -8° to -38°, more preferably +13° to +33° or -13° to -33°, particularly preferably +19° to +29° or -19° to -29°, especially preferably +21° to +27° or -21 to -27 ° , and most preferably +23° to +24° or -23° to -24°. Thus, in the most preferred embodiment (β = 2α + 45°) of the present invention, the angle β is preferably +61° to +121° or -31° to +29°, more preferably+71 ° to +111 ° or -21° to +19°, particularlypreferably +83° to +103° or -13° to +7°, especially preferably +87° to +99° or -9° to +3°, and most preferably +91° to +93° or -3° to -1°. In consideration of a production procedure for an elliptically polarizing plate (described later), it is particularly preferred that the angle β be substantially in parallel with or substantially perpendicular to the absorption axis of the polarizer. In the specification of the present invention, the phrase "substantially parallel" includes a case at 0°±3.0°, preferably 0°±1.0°, and more preferably 0°±0.5°. The phrase "substantially perpendicular" includes a case at 90°±3.0°, preferably 90°±1.0°, and more preferably 90°±0.5°.

A total thickness of the elliptically polarizing plate of the present invention is preferably 80 to 250 μm, more preferably 110 to 220 μm, and most preferably 140 to 190 μm. According to a method of producing an elliptically polarizing plate of the present invention (described later), the first birefringent layer may be laminated without use of an adhesive. Therefore, the total thickness of the elliptically polarizing plate may be reduced to minimum of about 1/4 of that of a conventional elliptically polarizing plate. As a result, the elliptically polarizing plate of the present invention may greatly contribute to reduction in thickness of a liquid crystal display. Hereinafter, each of the layers constituting the elliptically polarizing plate of the present invention will be described more specifically.

A-2. First birefringent layer

As described above, the first birefringent layer 12 may serve as a so-called λ/2 plate. The first birefringent layer serves as a λ/2 plate, to thereby appropriately adjust retardation of wavelength dispersion characteristics (in particular, a wavelength range at which the retardation departs from λ/4) of the second birefringent layer serving as a λ/4 plate. An in-plane retardation (△nd) of the first birefringent layer at a wavelength of 590 nm is preferably 180 to 300 nm, more preferably 210 to 280 nm, and most preferably 230 to 240 nm. The in-plane retardation (Δnd) is determined from an equation Δnd = (nx - ny) x d. Here, nx represents a refractive index in a direction of a slow axis, and ny represents a refractive index in a direction of a fast axis (direction perpendicular to the slow axis in the same plane). d represents a thickness of the first birefringent layer. The first birefringent layer 12 preferably has a refractive index profile of nx > ny = nz. nz represents a refractive index in a thickness direction. In the present invention, the equation "ny = nz" includes not only a case where ny and nz are exactly the same, but also a case where ny and nz are substantially equal.

A thickness of the first birefringent layer is set such that it serves as a λ/2 plate most appropriately. In other words, the thickness thereof is set to provide a desired in-plane retardation. More specifically, the thickness is preferably 0.5 to 5 μm, more preferably 1 to 4 μm, and most preferably 1.5 to 3 μm.

Any suitable materials may be used as a material forming the first birefringent layer as long as the above characteristics are provided. A liquid crystal material is preferred, and a liquid crystal material (nematic liquid crystal) having a nematic phase as a liquid crystal phase is more preferred. A liquid crystal material is used, to thereby significantly

increase a difference between nx and ny of the resultant birefringent layer compared with that using a non-liquid crystal material. As a result, the thickness of the birefringent layer may be significantly reduced to provide the desired in-plane retardation. Examples of the liquid crystal material include a liquid crystal polymer and a liquid crystal monomer. Liquid crystallinity of the liquid crystal material may develop through a lyotropic mechanism or a thermotropic mechanism. Further, an alignment state of the liquid crystal is preferably homogeneous alignment. The liquid crystal polymer or the liquid crystal monomer may be used alone or in combination.

A liquid crystal monomer used as the liquid crystal material is preferably a polymerizable monomer and/or a crosslinkable monomer, for example. As describedbelow, this is because the alignment state of the liquid crystal monomer can be fixed by polymerizing or crosslinking the liquid crystal monomer. The alignment state of the liquid crystal monomer can be fixed by aligning the liquid crystal monomer, and then polymerizing or crosslinking the liquid crystal monomers, for example. A polymer is formed through polymerization, and a three-dimensional network structure is formed through crosslinking. The polymer and the three-dimensional network structure are not liquid-crystalline. Thus, the formed first birefringent layer will not undergo phase transition into a liquid crystal phase, a glass phase, or a crystal phase by change in temperature, which is specific to a liquid crystal compound. As a result, the first birefringent layer is a birefringent layer which has excellent stability and is not affected by change in temperature.

Any suitable liquid crystal monomers may be employed as the liquid crystal monomer. For example, there are used polymerizable mesogenic compounds and the like described in JP 2002-533742 A (WO 00/37585) , EP 358208 (US 5211877) , EP 66137 (US 4388453) , WO 93/22397, EP 0261712, DE 19504224, DE 4408171, GB 2280445, and the like. Specific examples of the polymerizable mesogenic compounds include: LC242 (tradename) available from BASF Aktiengesellschaft; E7 (trade name) available from Merck & Co., Inc.; andLC-Silicone-CC3767 (trade name) available from Wacker-Chemie GmbH.

For example, a nematic liquid crystal monomer is preferred as the liquid crystal monomer, and a specific example thereof includes a monomer represented by the below-indicated formula (1) . The liquid crystal monomer may be used alone or in combination of two or more thereof.

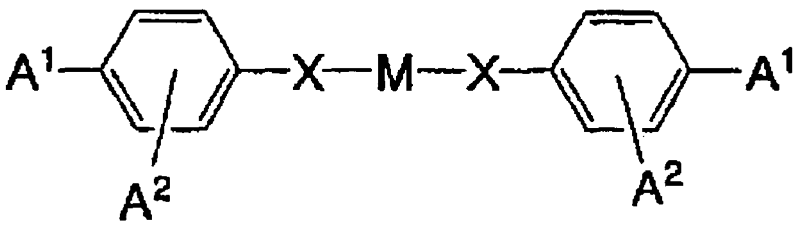

··· (1)

In the above formula (1), $A^1$ and $A^2$ each represent a polymerizable group, and may be the same or different from each other. One of $A^1$ and $A^2$ may represent hydrogen. Each X independently represents a single bond, -O-, -S-, -C=N-, -O-CO-, -CO-O-, -O-CO-O-, -CO-NR-, -NR-CO-, -NR-, -O-CO-NR-, -NR-CO-O-, $-CH_2-O-$, or -NR-CO-NR-R represents H or an alkyl group having 1 to 4 carbon atoms. M represents a mesogen group.

In the above formula (1) , Xs may be the same or different from each other, but are preferably the same.

Of monomers represented by the above formula (1) , each $A^2$ is preferably arranged in an ortho position with respect to $A^1$.

$A^1$ and $A^2$ are preferably each independently represented by the below-indicated formula (2) , and $A^1$ and $A^2$ preferably represent the same group.

$$Z\text{-}X\text{-}(Sp)_n \qquad (2)$$

In the above formula (2), Z represents a crosslinkable group, and X is the same as that defined in the above formula (1). Sp represents a spacer consisting of a substituted or unsubstituted linear or branched alkyl group having 1 to 30 carbon atoms. n represents 0 or 1. A carbon chain in Sp may be interrupted by oxygen in an ether functional group, sulfur in a thioether functional group, a non-adjacent imino group, an alkylimino group having 1 to 4 carbon atoms, or the like.

In the above formula (2), Z preferably represents any one of functional groups represented by the below-indicated formulae. In the below-indicated formulae, examples of R include a methyl group, an ethyl group, an n-propyl group, an i-propyl group, an n-butyl group, an i-butyl group, and a t-butyl group.

$H_2C{=}CH-$, $HC{\equiv}C-$, 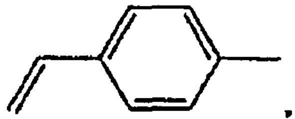 ,

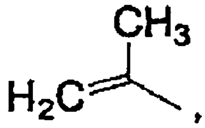 , 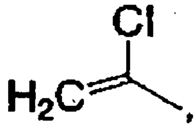 , 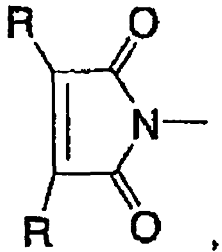 ,

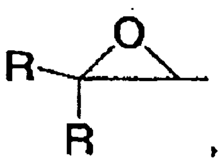 , 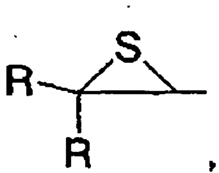 , 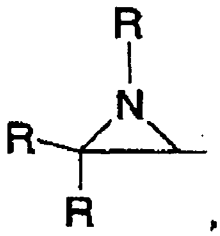 ,

$-N{=}C{=}O$, $-N{=}C{=}S$, $-O-C{\equiv}N$,

In the above formula (2), Sp preferably represents any one of structural units represented by the below-indicated formulae. In the below-indicated formulae, m preferably represents 1 to 3, and p preferably represents 1 to 12.

$-(CH_2)_p-$, $-(CH_2CH_2O)_mCH_2CH_2-$, $-CH_2CH_2SCH_2CH_2-$,
$-CH_2CH_2NHCH_2CH_2-$,

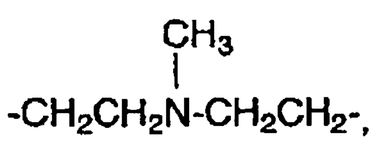 , 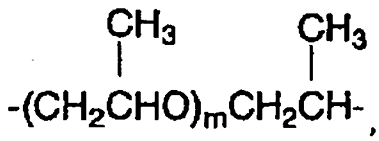 ,

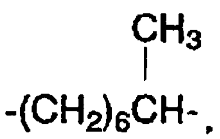 , 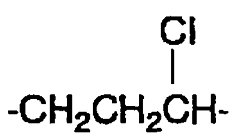

In the above formula (1) , M is preferably represented by the below-indicated formula (3). In the below-indicated formula (3), X is the same as that defined in the above formula (1). Q represents a substituted or unsubstituted linear or branched alkylene group, or an aromatic hydrocarbon group, for example. Q may represent a substituted or unsubstituted linear or branched alkylene group having 1 to 12 carbon atoms, for example.

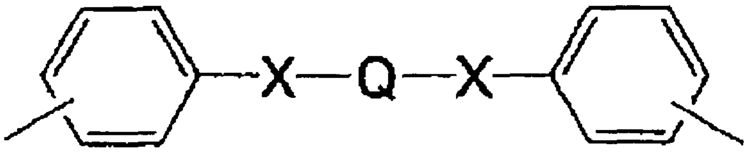

... (3)

In the case where Q represents an aromatic hydrocarbon group, Q preferably represents any one of aromatic hydrocarbon groups representedbythebelow-indicated formulae or substituted analogues thereof.

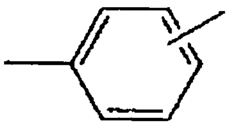
,
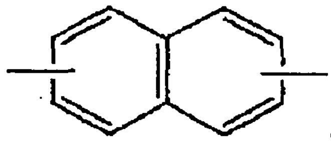
,
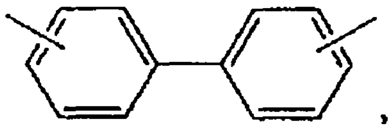
,
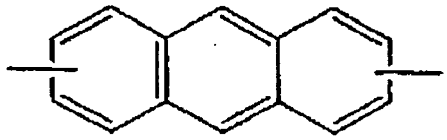
,
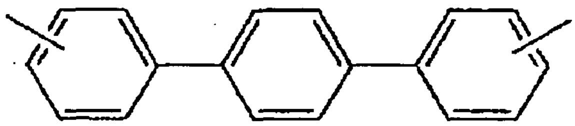

The substituted analogues of the aromatic hydrocarbon groups represented by the above formulae may each have 1 to 4 substituents per aromatic ring, or 1 to 2 substituents per aromatic ring or group. The substituents may be the same or different from each other. Examples of the substituents include: an alkyl group having 1 to 4 carbon atoms; a nitro group; a halogen group such as F, Cl, Br, or I; a phenyl group; and an alkoxy group having 1 to 4 carbon atoms.

Specific examples of the liquid crystal monomer include monomers represented by the following formulae (4) to (19).

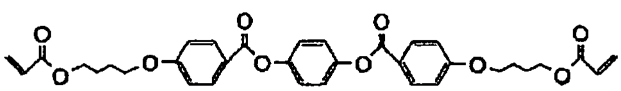

... (4)

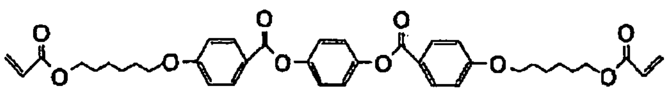

... (5)

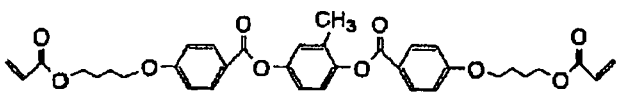

... (6)

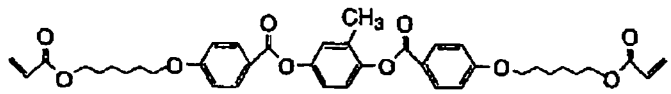 ···(7)

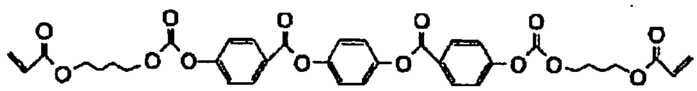 ···(8)

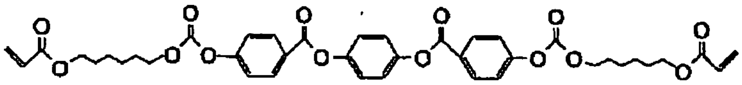 ···(9)

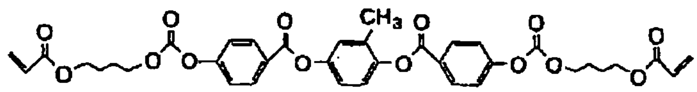 ···(10)

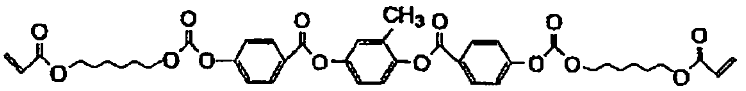 ···(11)

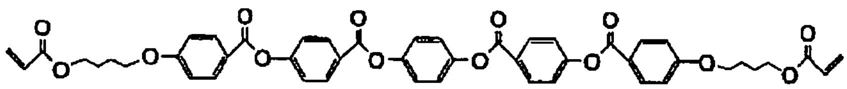 ···(12)

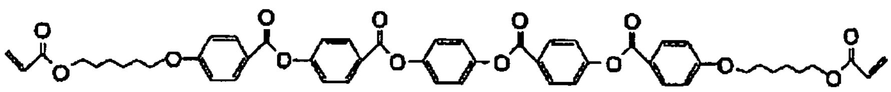 ···(13)

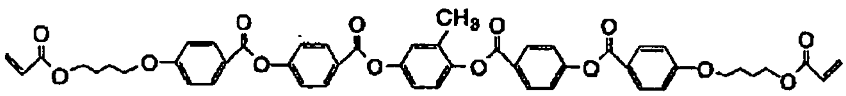 ···(14)

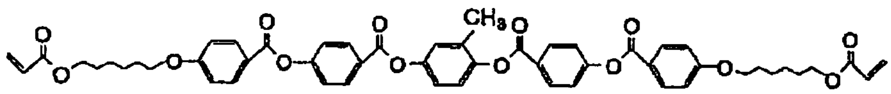 ···(15)

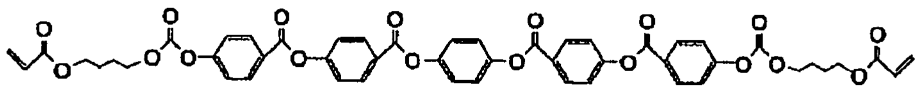 ···(16)

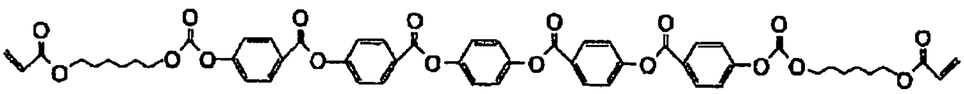 ···(17)

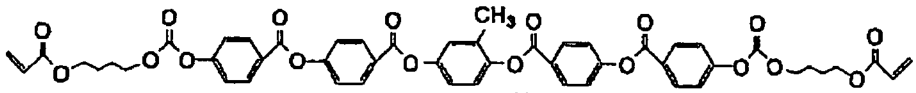 ···(18)

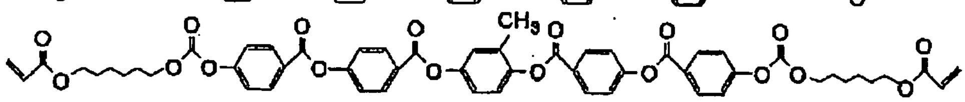 ···(19)

A temperature range in which the liquid crystal monomer exhibits liquid-crystallinity varies depending on the type of liquid crystal monomer. More specifically, the temperature range is preferably 40 to 120°C, more preferably 50 to 100°C, and most preferably 60 to 90°C.

A-3. Second birefringent layer

As described above, the second birefringent layer 13 may serve as a so-called λ/4 plate. According to the present invention, the wavelength dispersion characteristics of the second birefringent layer serving as a λ/4 plate are corrected by optical characteristics of the first birefringent layer serving as a λ/2 plate, to thereby exhibit satisfactory circularly polarizing function over a wide wavelength range. An in-plane retardation (Δnd) of the second birefringent layer at a wavelength of 590 nm is preferably 90 to 180 nm, more preferably 90 to 150 nm, and most preferably 105 to 135 nm. An Nz coefficient (= (nx - nz) / (nx - ny) ) of the second birefringent layer is preferably 1.0 to 2.2, more preferably 1.2 to 2.0, and most preferably 1.4 to 1.8. Further, the second birefringent layer 13 preferably has a refractive index profile of nx > ny > nz.

A thickness of the second birefringent layer is set such that it serves as a λ/4 plate most appropriately. In other words, the thickness thereof is set to provide a desired in-plane retardation. More specifically, the thickness is preferably 10 to 100 μm, more preferably 20 to 80 μm, and most preferably 40 to 70 μm.

The second birefringent layer is generally formed by subjecting a polymer film to stretching treatment. A second birefringent layer having the desired optical characteristics (such as refractive index profile, in-plane retardation, thickness direction retardation, and Nz coefficient) may be obtained by appropriately selecting the type of polymer, stretching conditions (such as stretching temperature, stretching ratio, and stretching direction), a stretching method, and the like. More specifically, the stretching temperature is preferably 120 to 180°C, and more preferably 140 to 170°C. The stretching ratio is preferably 1.05 to 2.0 times, and more preferably 1.3 to 1.6 times. An example of the stretching method is lateral uniaxial stretching. The stretching direction is preferably a direction substantially perpendicular to the absorption axis of the polarizer (width direction of the polymer film, that is, direction perpendicular to a longitudinal direction of the polymer film).

Any suitable polymers maybe employed as a polymer constituting the polymer film. Specific examples of the polymer include polymers constituting a positive birefringent film such as a polycarbonate-based polymer, a norbornene-based polymer, a cellulose-based polymer, a polyvinyl alcohol-based polymer, and a polysulfone-based polymer. Of those, a polycarbonate-based polymer and a norbornene-based polymer are preferred.

Alternatively, the second birefringent layer is constituted by a film formed of a resin composition containing polymerizable liquid crystal and a chiral agent. The polymerizable liquid crystal and the chiral agent are described in JP 2003-287623 A, which is incorporated herein by reference. For example, the above-described resin composition is applied onto any suitable substrate, and the whole is heated to a temperature at which the polymerizable liquid crystal exhibits a liquid crystal state. Thus, the polymerizable liquid crystal is aligned in a twisted state (more specifically, by forming a cholesteric structure) by the chiral agent. The polymerizable liquid crystal is polymerized in this state, to thereby provide a film having the fixed cholesteric structure. A content of the chiral agent in the composition is adjusted, to allow change in degree of twist of the cholesteric structure. As a result, a direction of the slow axis of the resultant second birefringent layer may be controlled. Such a film is very preferred because the direction of the slow axis can be set at an angle other than 0° (parallel) or 90° (perpendicular) with respect to the absorption axis of the polarizer.

A-4. Polarizer

Any suitable polarizers may be employed as the polarizer 11 in accordance with the purpose. Examples thereof include: a film prepared by adsorbing a dichromatic substance such as iodine or a dichromatic dye on a hydrophilic polymer film such as a polyvinyl alcohol-based film, a partially formalized polyvinyl alcohol-based film, or a partially saponified ethylene/vinyl acetate copolymer-based film and uniaxially stretching the film; and a polyene-based orientation film such as a dehydrated product of a polyvinyl alcohol-based film or a dechlorinated product of a polyvinyl chloride-based film. Of those, a polarizer prepared by adsorbing a dichromatic substance such as iodine on a polyvinyl alcohol-based film and uniaxially stretching the film is particularly preferred because of high polarized dichromaticity. A thickness of the polarizer is not particularly limited, but is generally about 1 to 80 μm.

The polarizer prepared by adsorbing iodine on a polyvinyl alcohol-based film and uniaxially stretching the filmmaybe produced by, for example: immersing a polyvinyl alcohol-based film in an aqueous solution of iodine for coloring; and stretching the film to a 3 to 7 times length of the original length. The aqueous solution may contain boric acid, zinc sulfate, zinc chloride, or the like as required, or the polyvinyl alcohol-based film may be immersed in an aqueous solution of potassium iodide or the like. Further, the polyvinyl alcohol-based film may be immersed and washed in water before coloring as required.

Washing the polyvinyl alcohol-based film with water not only allows removal of contamination or an antiblocking

agent on a film surface, but also provides an effect of preventing nonuniformity such as uneven coloring by swelling of the polyvinyl alcohol-based film. The stretching of the film may be performed after coloring of the film with iodine, performed during coloring of the film, or performed followed by coloring of the film with iodine. The stretching may be performed in an aqueous solution of boric acid or potassium iodide, or in a water bath.

A-5. Protective layer

The first protective layer 14 and the second protective layer 15 are each formedof any suitable film which can be used as a protective layer for a polarizer. Specific examples of a material used as a main component of the film include transparent resins such as a cellulose-based resin (such as triacetylcellulose (TAC)), a polyester-based resin, a polyvinyl alcohol-based resin, a polycarbonate-based resin, a polyamide-based resin, a polyimide-based resin, a polyether sulfone-based resin, a polysulfone-based resin, a polystyrene-based resin, a polynorbornene-based resin, a polyolefin-based resin, an acrylic resin, and an acetate-based resin. Another example thereof includes an acrylic, urethane-based, acrylic urethane-based, epoxy-based, or silicone-based thermosetting resin or UV-curing resin. Still another example thereof includes a glassy polymer such as a siloxane-based polymer. Further, a polymer film described in JP 2001-343529 A (WO 01/37007) may also be used. More specifically, the film is formed of a resin composition containing a thermoplastic resin having a substituted or unsubstituted imide group on a side chain, and a thermoplastic resin having a substituted or unsubstituted phenyl group and a nitrile group on a side chain. A specific example thereof includes a resin composition containing an alternate copolymer of isobutene and N-methylmaleimide, and an acrylonitrile/styrene copolymer. The polymer film may be an extruded product of the above-mentioned resin composition, for example. Of those, TAC, a polyimide-based resin, a polyvinyl alcohol-based resin, and a glassy polymer are preferred.

It is preferred that the protective layer be transparent and have no color. More specifically, the protective layer has a thickness direction retardation of preferably -90 nm to +90 nm, more preferably -80 nm to +80 nm, and most preferably -70 nm to +70 nm.

The protective layer has any suitable thickness as long as the preferred thickness direction retardation can be obtained. More specifically, the thickness of the protective layer is preferably 1 to 100 μm, more preferably 5 to 80 μm, and most preferably 10 to 50 μm. The thickness direction retardation (Rth) is determined from an equation Rth = (nx - nz) x d.

The surface of the second protective layer opposite to that of the polarizer (that is, the outermost part of the polarizing plate) may be subjected to hard coat treatment, antireflection treatment, anti-sticking treatment, anti-glare treatment, or the like as required.

B. Method of producing elliptically polarizing plate

A method of producing an elliptically polarizing plate according to an embodiment of the present invention includes the steps of: subjecting a surface of a transparent protective film (eventually, the protective layer 14) to alignment treatment; applying a liquid crystal composition onto the surface of the transparent protective film which has been subj ected to the alignment treatment; forming a first birefringent layer by aligning a liquid crystal material in the liquid crystal composition in accordance with an alignment direction of the transparent protective film; laminating a polarizer on a surface of the transparent protective film not subjected to the alignment treatment; and forming a second birefringent layer by laminating a polymer film on a surface of the first birefringent layer, in which the elliptically polarizing plate has a relationship represented by the following expression (1) :

$$2\alpha + 40° < \beta < 2\alpha + 50° \cdots (1)$$

in the expression (1), α represents an angle between an absorption axis of the polarizer and the alignment direction of the transparent protective film (that is, a slow axis of the first birefringent layer), and β represents an angle between the absorption axis of the polarizer and a slow axis of the second birefringent layer. Such a production method provides the elliptically polarizing plate shown in FIG. 1, for example.

The order of the steps and/or the film subj ected to the alignment treatment may be appropriately changed in accordance with a laminated structure of the target elliptically polarizing plate. For example, the step of laminating the polarizer may be performed after the step of forming or laminating any one of the birefringent layers. The alignment treatment may be performed on the transparent protective film, or may be performed on any suitable substrate. In a case where the substrate is subjected to the alignment treatment, the film (more specifically, the first birefringent layer) formed on the substrate may be transferred (laminated) in an appropriate order in accordance with the desired laminated structure of the elliptically polarizing plate. Hereinafter, description is given of each of the steps.

B-1. Alignment treatment for transparent protective film

A surface of a transparent protective film (eventually, the protective layer 14) is subjected to alignment treatment, and an application liquid (liquid crystal composition) containing a predetermined liquid crystal material is applied onto the surface, to thereby form the first birefringent layer 12 having a slow axis at an angle $\alpha$ with respect to the absorption axis of the polarizer 11 as shown in FIG. 2 (the step of forming a first birefringent layer is described below).

Any suitable alignment treatment may be employed as the alignment treatment for the transparent protective film. Specific examples of the alignment treatment include mechanical alignment treatment, physical alignment treatment, and chemical alignment treatment. Specific examples of the mechanical alignment treatment include rubbing treatment and stretching treatment. Specific examples of the physical alignment treatment include magnetic field alignment treatment and electrical field alignment treatment. Specific examples of the chemical alignment treatment include oblique deposition method and photoalignment treatment. The rubbing treatment is preferred. Any suitable conditions may be employed as conditions for various alignment treatments in accordance with the purpose.

The alignment direction of the alignment treatment is set to be a direction at a predetermined angle with respect to the absorption axis of the polarizer when the transparent protective film and the polarizer are laminated. The alignment direction is substantially the same as the direction of the slow axis of the first birefringent layer 12 as described below. Thus, the predetermined angle is preferably +8° to +38° or -8° to -38°, more preferably +13° to +33° or -13° to -33°, particularly preferably +19° to +29° or -19° to -29°, especially preferably +21° to +27° or -21° to -27°, and most preferably +23° to +24° or -23° to -24°.

The alignment treatment at a predetermined angle with respect to a continuous transparent protective film involves treatment in a longitudinal direction of the continuous transparent protective film and treatment in an oblique direction (more specifically, direction at a predetermined angle) with respect to the longitudinal direction or direction perpendicular thereto (width direction) of the continuous protective film. The polarizer is produced by stretching the polymer film colored with a dichromatic substance as described above, and has an absorption axis in the stretching direction. For mass production of the polarizer, a continuous polymer film is prepared and is continuously stretched in a longitudinal direction. In a case where a continuous polarizer and a continuos transparent protective film are attached together, longitudinal directions thereof are in the direction of the absorption axis of the polarizer. Thus, in order to provide the transparent protective film having an alignment ability in a direction at a predetermined angle with respect to the absorption axis of the polarizer, the transparent protective film is desirably subjected to the alignment treatment in an oblique direction. The direction of the absorption axis of the polarizer and the longitudinal directions of the continuous films (polarizer and transparent protective film) are substantially the same, and thus the direction of the alignment treatment may be at the predetermined angle with respect to the longitudinal directions. Meanwhile, in a case where the alignment treatment is performed in a longitudinal direction or width direction of the transparent protective film, the transparent protective film must be cut out in an oblique direction and then laminated. As a result, angles between optical axes may vary with respect to every cut-out film, which may result in variation in quality with respect to every product, production requiring high cost and long time, increased waste, and difficulties in production of large films.

The transparent protective film may be directly subjected to the alignment treatment. Alternatively, any suitable alignment layer (in general, a silane coupling agent layer, a polyvinyl alcohol layer, or a polyimide layer) may be formed, and the alignment layer may be subjected to the alignment treatment. For example, rubbing treatment is preferably directly performed on the surface of the transparent protective film because the rubbing treatment on the alignment layer may involve the following disadvantages in formation of the alignment layer. In a case where the alignment layer is a polyimide layer: (1) a solvent which does not corrode the transparent protective film must be selected, thereby causing difficulties in selection of a solvent for a composition forming the alignment layer; and (2) curing is required at high temperatures (150 to 300°C, for example), thereby possibly providing an elliptically polarizing plate with a bad appearance. In a case where the alignment layer is a polyvinyl alcohol layer, thermal resistance and humidity resistance of the alignment layer are insufficient, and the transparent protective film and the alignment layer may peel off in a high temperature and high humidity environment, thereby possibly causing clouding. In a case where the alignment layer is a silane coupling agent layer, a liquid crystal layer (first birefringent layer) to be formed is easily inclined, thereby possibly inhibiting realization of the desired positive uniaxial characteristics.

B-2. Step of applying liquid crystal composition forming first birefringent layer

Next, an application liquid (liquid crystal composition) containing a liquid crystal material as described in the section A-2 is applied onto the transparent protective film which has been subjected to the alignment treatment. Then, the liquid crystal material in the application liquid is aligned to form the first birefringent layer. More specifically, an application liquid having a liquid crystal material dissolved or dispersed in an appropriate solvent may be prepared, and the application liquid may be applied onto the surface of the transparent protective film which has been subjected to the alignment treatment. The step of aligning the liquid crystal material is described in the section B-3 below.

Any suitable solvents whichmay dissolve or disperse the liquid crystal material may be employed as the solvent. The type of solvent to be used may be appropriately selected in accordance with the type of liquid crystal material or the like. Specific examples of the solvent include: halogenated hydrocarbons such as chloroform, dichloromethane, carbon tetrachloride, dichloroethane, tetrachloroethane, methylene chloride, trichloroethylene, tetrachloroethylene, chlorobenzene, and orthodichlorobenzene; phenols such as phenol, p-chlorophenol, o-chlorophenol, m-cresol, o-cresol, and p-cresol; aromatic hydrocarbons such as benzene, toluene, xylene, mesitylene, methoxybenzene, and 1,2-dimethoxybenzene; ketone-based solvents such as acetone, methyl ethyl ketone (MEK), methyl isobutyl ketone, cyclohexanone, cyclopentanone, 2-pyrrolidone, and N-methyl-2-pyrrolidone; ester-based solvents such as ethyl acetate, butyl acetate, and propyl acetate; alcohol-based solvents such as t-butyl alcohol, glycerin, ethylene glycol, triethylene glycol, ethylene glycol monomethyl ether, diethylene glycol dimethyl ether, propylene glycol, dipropylene glycol, and 2-methyl-2,4-pentanediol; amide-based solvents such as dimethylformamide and dimethylacetamide; nitrile-based solvents such as acetonitrile and butyronitrole; ether-based solvents such as diethyl ether, dibutyl ether, tetrahydrofuran, and dioxane; and carbon disulfide, ethylcellosolve, butyl cellosolve, and ethyl cellosolve acetate. Of those, toluene, xylene, mesitylene, MEK, methyl isobutyl ketone, cyclohexanone, ethyl cellosolve, butyl cellosolve, ethyl acetate, butyl acetate, propyl acetate, and ethyl cellosolve acetate are preferred. The solvent may be used alone or in combination of two or more types thereof.

A content of the liquid crystal material in the liquid crystal composition (application liquid) may be appropriately determined in accordance with the type of liquid crystal material, the thickness of the target layer, and the like. More specifically, the content of the liquid crystal material is preferably 5 to 50 wt%, more preferably 10 to 40 wt%, and most preferably 15 to 30 wt%.

The liquid crystal composition (application liquid) may further contain any suitable additives as required. Specific examples of the additive include a polymerization initiator and a crosslinking agent. The additive is particularly preferably used when a liquid crystal monomer is used as the liquid crystal material. Specific examples of the polymerization initiator include benzoylperoxide (BPO) and azobisisobutyronitrile(AIBN). Specific examples of the crosslinking agent include an isocyanate-based crosslinking agent, an epoxy-based crosslinking agent, and a metal chelate crosslinking agent. Such additive may be used alone or in combination of two or more thereof. Specific examples of other additives include an antioxidant, a modifier, a surfactant, a dye, a pigment, a discoloration inhibitor, and a UV absorber. Such additive may also be used alone or in combination of two or more thereof. Examples of the antioxidant include a phenol-based compound, anamine-basedcompound, an organic sulfur-based compound, and a phosphine-based compound. Examples of the modifier include glycols, silicones, and alcohols. The surfactant is used for smoothing a surface of an optical film (that is, the first birefringent layer to be formed) , for example. Specific examples thereof include a silicone-based surfactant, an acrylic surfactant, and a fluorine-based surfactant.

An application amount of the application liquid may be appropriately determined in accordance with a concentration of the application liquid, the thickness of the target layer, and the like. In a case where the concentration of the liquid crystal material is 20 wt% in the application liquid, the application amount is preferably 0.03 to 0.17 ml, more preferably 0.05 to 0.15 ml, and most preferably 0.08 to 0.12 ml per 100 $cm^2$ of the transparent protective film.

Any suitable application methods maybe employed, and specific examples thereof include roll coating, spin coating, wire bar coating, dip coating, extrusion, curtain coating, and spray coating.

B-3. Step of aligning liquid crystal material forming first birefringent layer

Next, the liquid crystal material forming the first birefringent layer is aligned in accordance with the alignment direction of the surface of the transparent protective film. The liquid crystal material is aligned through treatment at a temperature at which the liquid crystal material exhibits a liquid crystal phase. The temperature may be appropriately determined in accordance with the type of liquid crystal material used. The treatment at such a temperature allows the liquid crystal material to be in a liquid crystal state, and the liquid crystal material is aligned in accordance with the alignment direction of the surface of the transparent protective film. Thus, birefringence is caused in the layer formed through application, to thereby form the first birefringent layer.

A treatment temperature may be appropriately determined in accordance with the type of liquid crystal material. More specifically, the treatment temperature is preferably 40 to 120°C, more preferably 50 to 100°C, and most preferably 60 to 90°C. A treatment time is preferably 30 seconds or more, more preferably 1 minute or more, particularly preferably 2 minutes or more, and most preferably 4 minutes or more. The treatment time of less than 30 seconds may provide an insufficient liquid crystal state of the liquid crystal material. Meanwhile, the treatment time is preferably 10 minutes or less, more preferably 8 minutes or less, and most preferably 7 minutes or less. The treatment time exceeding 10 minutes may cause sublimation of additives.

In a case where the liquid crystal monomer as described in the section A-2 is used as the liquid crystal material, the layer formed through the application is preferably subjected to polymerization treatment or crosslinking treatment. The polymerization treatment allows the liquid crystal monomer to be polymerized and to be fixed as a repeating unit of

a polymer molecule. The crosslinking treatment allows the liquid crystal monomer to form a three-dimensional network structure and to be fixed as a part of the network structure. As a result, the alignment state of the liquid crystal material is fixed. The polymer or three-dimensional structure formed through polymerization or crosslinking of the liquid crystal monomer is "non-liquid crystal". Thus, the formed first birefringent layer will not undergo phase transition into a liquid crystal phase, a glass phase, or a crystal phase by change in temperature, which is specific to a liquid crystal molecule.

A specific procedure for the polymerization treatment or crosslinking treatment may be appropriately selected in accordance with the type of polymerization initiator or crosslinking agent to be used. For example, in a case where a photopolymerization initiator or a photocrosslinking agent is used, photoirradiation may be performed. In a case where a UV polymerization initiator or a UV crosslinking agent is used, UV irradiation may be performed. The irradiation time, irradiation intensity, total amount of irradiation, and the like of light or UV light may be appropriately set in accordance with the type of liquid crystal material, the type of transparent protective film, the type of alignment treatment, desired characteristics for the first birefringent layer, and the like.

Such alignment treatment is performed to align the liquid crystal material in the alignment direction of the transparent protective film. Thus, the direction of the slow axis of the first birefringent layer formed is substantially the same as the alignment direction of the transparent protective film. The direction of the slow axis of the first birefringent layer is preferably +8° to +38° or -8° to -38°, more preferably +13° to +33° or -13° to -33°, particularly preferably +19° to +29° or -19° to -29°, especially preferably +21° to +27° or -21° to -27°, and most preferably +23° to +24 or -23 to -24 with respect to the longitudinal direction of the transparent protective film.

B-4. Step of laminating polarizer

Further, the polarizer is laminated on the surface of the transparent protective film opposite to the surface subjected to the alignment treatment. As described above, the polarizer is laminated at an appropriate point in time in the production method of the present invention. For example, the polarizermaybe laminated on the transparent protective layer in advance, may be laminated after the first birefringent layer is formed, or may be laminated after the second birefringent layer is formed.

Any suitable lamination methods (such as adhesion) may be employed as a method of laminating the transparent protective film and the polarizer. The adhesion may be performed by using any suitable adhesive or pressure-sensitive adhesive. The type of adhesive or pressure-sensitive adhesive may be appropriately selected in accordance with the type of adherend (that is, transparent protective film and polarizer) . Specific examples of the adhesive include: acrylic, vinyl alcohol-based, silicone-based, polyester-based, polyurethane-based, and polyether-based polymer adhesives; isocyanate-based adhesives; and rubber-based adhesives. Specific examples of the pressure-sensitive adhesive include acrylic, vinyl alcohol-based, silicone-based, polyester-based, polyurethane-based, polyether-based, isocyanate-based, and rubber-based pressure-sensitive adhesives.

A thickness of the adhesive or pressure-sensitive adhesive is not particularly limited, but is preferably 10 to 200 nm, more preferably 30 to 180 nm, and most preferably 50 to 150 nm.

According to the production method of the present invention, the slow axis of the first birefringent layer may be set in the desired direction in the alignment treatment for the transparent protective film. Thus, a continuous polarizing film (polarizer) stretched in a longitudinal direction (that is, film having an absorption axis in the longitudinal direction) can be used. In other words, a continuous transparent protective film which has been subjected to the alignment treatment at a predetermined angle with respect to its longitudinal direction and a continuous polarizing film (polarizer) may be continuously attached together while the respective longitudinal directions being arranged in the same direction. Thus, an elliptically polarizing plate can be obtained at very high production efficiency. According to the method of the present invention, the transparent protective film need not be cut out obliquely with respect to its longitudinal direction (stretching direction) for lamination. As a result, angles of optical axes do not vary with respect to every cut-out film, resulting in an elliptically polarizing film without variation in quality with respect to every product. Further, no wastes are produced by cutting of the film, and the elliptically polarizing plate can be obtained at low cost and production of a large polarizing plate is facilitated. The direction of the absorption axis of the polarizer is substantially in parallel with the longitudinal direction of the continuos film.

B-5 Step of forming second birefringent layer

Further, the secondbirefringent layer is formed on the surface of the first birefringent layer. In general, the secondbirefringent layer is formed by laminating the polymer film as described in the section A-3 on the surface of the first birefringent layer. The polymer film is preferably a stretched film. More specifically, the polymer film is a film stretched in a width direction as described in the section A-3. The stretched film has a slow axis in a width direction, and the slow axis is substantially perpendicular to the absorption axis (longitudinal direction) of the polarizer. A lamination method is not particularly limited, and any suitable adhesive or pressure-sensitive adhesive (such as an adhesive or pressure-sensitive adhesive described in the section B-4) is used for lamination.

Alternatively, as described in the section A-3, a resin composition containing polymerizable liquid crystal and a chiral agent is applied onto any suitable substrate, and the whole is heated to a temperature at which the polymerizable liquid crystal exhibits a liquid crystal state. Thus, the polymerizable liquid crystal is aligned in a twisted state (more specifically, by forming a cholesteric structure) by the chiral agent. The polymerizable liquid crystal is polymerized in this state, to thereby provide a film having the fixed cholesteric structure. The film is transferred onto the surface of the first birefringent layer from the substrate, to thereby form the second birefringent layer **13.**

B-6. Specific production procedure

An example of a specific procedure for the production method of the present invention will be described with reference to FIGS. **3** to **7.** In FIGS. **3** to **7,** reference numerals **111, 111', 112, 113, 114, 115,** and **116** each represent a roll for rolling a film and/or laminate forming each layer.

First, a continuous polymer film is prepared as a raw material for a polarizer, and is colored, stretched, and the like as described in the section A-4. The continuos polymer film is stretched continuously in a longitudinal direction. In this way, as shown in a perspective view of FIG. **3,** the continuos polarizer 11 having an absorption axis in a longitudinal direction (stretching direction: direction of arrow **A)** is obtained.

Meanwhile, as shown in a perspective view of FIG. **4A,** the continuous transparent protective film (eventually, the first protective layer) **14** is prepared, and a surface of the film is subjected to rubbing treatment by using a rubbing roll **120.** At this time, a rubbing direction is in a direction at a predetermined angle with respect to a longitudinal direction of the transparent protective film **14** such as +23° to +24° or -23° to -24° . Next, as shown in a perspective view of FIG. **4B,** the first birefringent layer **12** is formed on the transparent protective film **14** which has been subjected to the rubbing treatment as described in the sections B-2 and B-3. The first birefringent layer **12** has a liquid crystal material aligned along the rubbing direction, and the direction of its slow axis is in substantially the same direction (direction of arrow B) as the rubbing direction of the transparent protective film **14.**

Next, as shown in a schematic diagram of FIG. **5,** the transparent protective film (eventually, the second protective layer) **15,** the polarizer **11,** and a laminate **121** of the transparent protective film (eventually, the protective layer) **14** and the first birefringent layer **12** are delivered in a direction of an arrow, and are attached together by using an adhesive or the like (not shown) while the respective longitudinal directions being arranged in the same direction. In FIG. **5,** reference numeral **122** represents a guide roll for attaching together the films (the same also applies in FIG. **6).**

As shown in a schematic diagram of FIG. **6,** the continuous second birefringent layer **13** is prepared, and the continuous second birefringent layer **13** and a laminate **123** (having the secondprotective layer **15,** the polarizer **11,** the protective layer **14,** and the first birefringent layer **12)** are delivered in a direction of an arrow, and are attached together by using an adhesive or the like (not shown) while the respective longitudinal directions being arranged in the same direction. As described above, the direction (angle $\alpha$**)** of the slow axis of the first birefringent layer **12** is set to +23 to + 24° or -23° to -24° with respect to the longitudinal direction of the film (absorption axis of the polarizer 11) . A relationship represented by an expression $\beta = 2\alpha + 45°$ provides an angle $\beta$ of 91° to 93° or -3° to -1°. That is, the slow axis of the second birefringent layer **13** may be substantially perpendicular to the longitudinal direction of the film (absorption axis of the polarizer 11) . As a result, a general stretched polymer film, which has been stretched in a direction perpendicular to the longitudinal direction, can be used, thereby significantly suppressing the production cost.

In a case where a resin composition containing polymerizable liquid crystal and a chiral agent is used as the second birefringent layer **13,** a procedure as shown in FIGS. **7A** and **7B** may be employed. That is, as shown in a schematic diagram of FIG. **7A,** a laminate **125** (formed through application of the second birefringent layer **13** on a substrate **26)** is prepared. The laminate **125** and the laminate **123** (having the second protective layer **15,** the polarizer **11,** the protective layer **14,** and the first birefringent layer **12)** are delivered in a direction of an arrow, and are attached together by using an adhesive or the like (not shown) while the respective longitudinal directions being arranged in the same direction. Finally, as shown in FIG. **7B,** the substrate **26** is peeled off from the attached laminates.

As described above, the elliptically polarizing plate **10** of the present invention is obtained.

B-7. Other components of elliptically polarizing plate

The elliptically polarizing plate of the present invention may further include another optical layer. Any suitable optical layers may be employed as the other optical layer in accordance with the purpose or the type of image display. Specific examples of the other optical layer include a birefringent layer (retardation film), a liquid crystal film, a light scattering film, and a diffraction film.

The elliptically polarizing plate of the present invention may further include a sticking layer as an outermost layer on at least one side. Inclusion of the sticking layer as an outermost layer facilitates lamination of the elliptically polarizing plate with other members (such as liquid crystal cell) , to thereby prevent peeling off of the elliptically polarizing

plate from other members. Any suitable materials may be employed as a material for the sticking layer. Specific examples of the material include those described in the section B-4. A material having excellent humidity resistance and thermal resistance is preferably used in view of preventing foaming or peeling due to moisture absorption, degradation of optical characteristics and warping of a liquid crystal cell due to difference in thermal expansion, and the like.

For practical purposes, the surface of the sticking layer is covered with an appropriate separator until the elliptically polarizing plate is actually used, to thereby prevent contamination. The separator may be formed by providing a release coating on any suitable film by using a silicone-based, long-chain alkyl-based, fluorine-based, or molybdenum sulfide release agent, for example.

Each layer of the elliptically polarizing plate of the present invention may be provided with UV absorbability through treatment or the like with a UV absorber such as a salicylate-based compound, a benzophenone-based compound, a benzotriazole-based compound, a cyanoacrylate-based compound, or a nickel complex salt-based compound.

C. Use of elliptically polarizing plate

The elliptically polarizing plate of the present invention may be suitably used for various image displays (such as liquid crystal display and selfluminous display). Specific examples of the image display for which the elliptically polarizing plate may be used include a liquid crystal display, an EL display, a plasma display (PD) , and a field emission display (FED) . The elliptically polarizing plate of the present invention used for a liquid crystal display is useful for,viewing angle compensation, for example. The elliptically polarizing plate of the present invention is used for a liquid crystal display of a circularly polarization mode, and is particularly useful for a homogeneous alignment TN liquid crystal display, an in-plane switching (IPS) liquid crystal display, and a vertical alignment (VA) liquid crystal display. The elliptically polarizing plate of the present invention used for an EL display is useful for prevention of electrode reflection, for example.

D. Image display

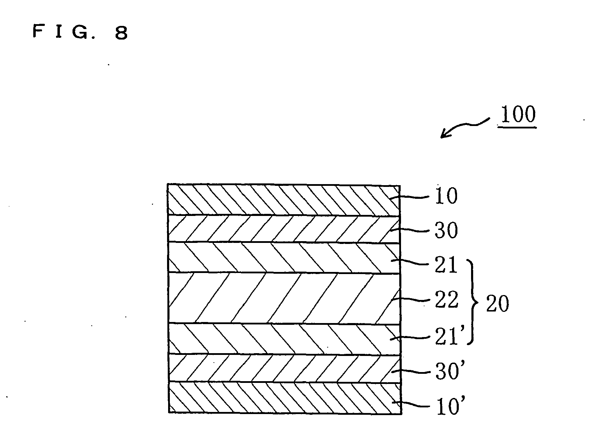

A liquid crystal display will be described as an example of an image display of the present invention. Here, a liquid crystal panel used for the liquid crystal display will be described. Any suitable constitutions may be employed for a constitution of the liquid crystal display excluding the liquid crystal panel in accordance with the purpose. FIG. 8 is a schematic sectional view of a liquid crystal panel according to a preferred embodiment of the present invention. A liquid crystal panel 100 includes: a liquid crystal cell 20, retardation plates 30 and 30' arranged on both sides of the liquid crystal cell 20; and polarizing plates 10 and 10' arranged on outer sides of the respective retardation plates. Any suitable retardation plates may be employed as the retardation plates 30 and 30' in accordance with the purpose and an alignment mode of the liquid crystal cell. At least one of the retardation plates 30 and 30' may be omitted in accordance with the purpose and the alignment mode of the liquid crystal cell. The polarizing plate **10** employs the elliptically polarizing plate of the present invention as described in the sections A and B. The polarizing plate (elliptically polarizing plate) **10** is arranged such that the birefringent layers **12** and **13** are positioned between the polarizer **11** and the liquid crystal cell **20.** The polarizing plate **10'** employs any suitable polarizing plates. The polarizing plates **10** and **10'** are generally arranged such that absorption axes of the respective polarizers are perpendicular to each other. As shown in FIG. **8,** the elliptically polarizing plate **10** of the present invention is preferably arranged on a viewer side (upper side) in the liquid crystal display (liquid crystal panel) of the present invention. The liquid crystal cell **20** includes: a pair of glass substrates **21** and **21' ;** and a liquid crystal layer **22** as a display medium arranged between the substrates. One substrate (active matrix substrate) **21'** is provided with: a switching element (TFT, in general) for controlling electrooptic characteristics of liquid crystal; and a scanning line for providing a gate signal to the switching element and a signal line for providing a source signal thereto (the element and the lines not shown) . The other glass substrate (color filter substrate) **21** is provided with color filters (not shown). The color filters may be provided in the active matrix substrate **21'** as well. A space (cell gap) between the substrates **21** and **21'** is controlled by a spacer (not shown). An alignment layer (not shown) formed of, for example, polyimide is provided on a side of each of the substrates **21** and **21'** in contact with the liquid crystal layer **22.**

Hereinafter, the present invention will be more specifically described by way of examples. However, the present invention is not limited to the examples. Methods of measuring characteristics in the examples are as described below.

(1) Measurement of retardation

Refractive indices nx, ny, and nz of a sample film were measured with an automatic birefringence analyzer (Automatic birefringence analyzer KOBRA-31PR manufactured by Oji Scientific Instruments), and an in-plane retardation Δnd and a thickness direction retardation Rth were calculated. A measurement temperature was 23°C, and a measurement wavelength was 590 nm.

(2) Measurement of thickness

The thickness of the first birefringent layer was measured through interference thickness measurement by using MCPD-2000, manufactured by Otsuka Electronics Co., Ltd. The thickness of each of other various films was measured with a dial gauge.

(3) Measurement of transmittance

The same elliptically polarizing plates obtained in Example 1 were attached together. The transmittance of the attached sample was measured with DOT-3 (trade name, manufactured by Murakami Color Research Laboratory). A laminated structure of the elliptically polarizing plate is described below.

(4) Measurement of contrast ratio

The same elliptically polarizing plates were superimposed, and were irradiated with backlight. A white image (absorption axes of polarizers are in parallel with each other) and a black image (absorption axes of polarizers are perpendicular to each other) were displayed, and were scanned from 45° to -135° with respect to the absorption axis of the polarizer on the viewer side, and from -60° to 60° with respect to the normal by using "EZ Contrast 160D" (trade name, manufactured by ELDIM SA). A contrast ratio "YW/YB" in an oblique direction was calculated from a Y value (YW) of the white image and a Y value (YB) of the black image.

(5) Humidity resistance test

The obtained elliptically polarizing plate was left standing at 60°C and 95% (RH) for 500 hours, and its appearance was visually observed. The term "good" refers to a transparent elliptically polarizing plate, and the term "poor" refers to a clouded elliptically polarizing plate.

(Example 1)

I. Preparation of elliptically polarizing plate as shown in FIG. 1

I-a. Alignment treatment for transparent protective film (preparation of alignment substrate)

Transparent protective films were subjected to alignment treatment, to thereby prepare alignment substrates (eventually, protective layers).
Substrates (1) to (8) : A PVA film (thickness of 0.1 μm) was formed on a surface of a TAC film (thickness of 40 μm) . Then, the surface of the PVA film was subjected to rubbing at a rubbing angle shown in Table 1 by using a rubbing cloth, to thereby form each of alignment substrates.
Substrates (9) and (10) : A TAC film (thickness of 40 μm) was subjected to rubbing at a rubbing angle shown in Table 1 by using a rubbing cloth, to thereby form each of alignment substrates.
Substrates (11) and (12) : A silane coupling agent (KBM-503, trade name; available from Shin-Etsu Silicones) was applied onto a surface of a TAC film (thickness of 40 μm) The surface of the silane coupling agent was subjected to rubbing at a rubbing angle shown in Table 1 by using a rubbing cloth, to thereby form each of alignment substrates.
Substrates (13) and (14): A PVA film (thickness of 0.1 μm) was formed on a surface of a TAC film (thickness of 40 μm). Then, the surface of the PVA film was subjected to rubbing at a rubbing angle shown in Table 1 by using a rubbing cloth, to thereby form each of alignment substrates. Table 1 collectively shows the rubbing angle and thickness direction retardation of each of the protective layers.

Table 1

| No. | Substrate | Rubbing angle (angle α) | Thickness direction retardation |
|---|---|---|---|
| (1) | TAC+PVA | 8° | 61 nm |
| (2) | TAC+PVA | -8° | 61 nm |
| (3) | TAC+PVA | 13° | 61 nm |
| (4) | TAC+PVA | -13° | 61 nm |
| (5) | TAC+PVA | 23° | 61 nm |
| (6) | TAC+PVA | -23° | 59 nm |

Table continued

| No. | Substrate | Rubbing angle (angle α) | Thickness direction retardation |
|---|---|---|---|
| (7) | TAC+PVA | 33° | 61 nm |
| (8) | TAC+PVA | -33° | 61 nm |
| (9) | TAC | -23° | 59 nm |
| (10) | TAC | -33° | 61 nm |
| (11) | TAC+Si | 23° | 61 nm |
| (12) | TAC+Si | -23° | 59 nm |
| (13) | TAC+PVA | 38° | 61 nm |
| (14) | TAC+PVA | -38° | 61 nm |

I-b. Preparation of first birefringent layer

10 g of polymerizable liquid crystal (Paliocolor LC242, trade name; available from BASF Aktiengesellschaft) exhibiting a nematic liquid crystal phase, and 0.5 g of a photopolymerization initiator (IRGACURE 907, trade name; available from Ciba Specialty Chemicals) for the polymerizable liquid crystal compound were dissolved in 40 g of toluene, to thereby prepare a liquid crystal composition (application liquid). The liquid crystal composition was applied onto the alignment substrate prepared as described above by using a bar coater, and the whole was heated and dried at 90°C for 2 minutes, to thereby align the liquid crystal. The thus-formed liquid crystal layer was irradiated with light of 20 $mJ/cm^2$ by using a metal halide lamp, and the liquid crystal layer was cured, to thereby form each of first birefringent layers (1) to (5). The thickness and retardation of each of the first birefringent layers were adjusted by changing an application amount of the application liquid. Table 2 shows the thickness and in-plane retardation (nm) of each of the first birefringent layers formed.

Table 2

| No. | Thickness | Retardation |
|---|---|---|
| (1) | 2.0 μm | 120 nm |
| (2) | 2.2 μm | 180 nm |
| (3) | 2.4 μm | 240 nm |
| (4) | 2.6 μm | 300 nm |
| (5) | 2.8 μm | 360 nm |

I-c. Preparation of second birefringent layer (I)

Apolycarbonate film (thickness of 60 μm) or a norbornene-based film (Arton, trade name; available from JSR Corporation; thickness of 60 μm) was uniaxially stretched at a predetermined temperature, to thereby prepare each of second birefringent layers. Table 3 shows the type of film used (polycarbonate film is represented by PC, and norbornene film is represented by NB) , the stretching conditions (such as a stretching direction), the angle β (angle of a slow axis of the film with respect to a longitudinal direction), and the retardation value to be obtained.

Table 3

| FilmNo. | Stretching conditions | | | Birefringent layer | | |
|---|---|---|---|---|---|---|
| | Direction | Temperature | Ratio | Angle β | Thickness | Retardation |
| (a1) PC | Lateral | 150°C | 1.2 times | 90° | 50 μm | 60 nm |
| (a2) PC | Lateral | 150°C | 1.3 times | 90° | 50 μm | 90 nm |
| (a3) PC | Lateral | 150°C | 1.45 times | 90° | 50 μm | 120 nm |
| (a4) PC | Lateral | 150°C | 1.6 times | 90° | 50 μm | 150 nm |
| (a5) PC | Lateral | 150°C | 2.0 times | 90° | 50 μm | 180 nm |
| (a6) PC | Longitudinal | 140°C | 1.05 times | 0° | 55 μm | 140 nm |
| (a7) NB | Longitudinal | 170°C | 1.4 times | 0° | 65 μm | 140 nm |
| (b1) PC | Longitudinal | 140°C | 1.1 times | 0° | 55 μm | 270 nm |
| (b2) NB | Longitudinal | 170°C | 1.9 times | 0° | 65 μm | 270 nm |

I-d. Preparation of second birefringent layer (II)

Polymerizable liquid crystal (Paliocolor LC242, trade name; available from BASF Aktiengesellschaft) exhibiting a nematic liquid crystal phase, a chiral agent (Paliocolor LC756, trade name; available from BASF Aktiengesellschaft) , and a photopolymerization initiator (IRGACURE 907, trade name; available from Ciba Specialty Chemicals) for the polymerizable liquid crystal compound in respective amounts shown in Table 4 were dissolved in 40 g of toluene, to thereby prepare a liquid crystal composition (application liquid) . Meanwhile, a polyethylene terephthalate resin was extruded, laterally stretched at 140°C, and recrystallized at 200°C to form a film, which was used as a substrate. The application liquid was applied onto the substrate film by using a bar coater, and the whole was heated and dried at 90°C for 2 minutes, to thereby align the liquid crystal. The thus-formed liquid crystal layer was irradiated with light of 1 $mJ/cm^2$ by using a metal halide lamp, and the liquid crystal layer was cured, to thereby form each of films for second birefringent layers c1 to c3 . Table 4 collectively shows the amounts of raw materials and the angle β of the slow axis of each of the films c1 to c3 with respect to the absorption axis of the polarizer.

Table 4

| Film No. | Polymerizable liquid crystal | Chiral agent | Polymerization initiator (unit: g) | Angle β |
|---|---|---|---|---|
| c1 | 9.9964 | 0.0036 | 3 | 85° |
| c2 | 9.9930 | 0.0070 | 3 | 80° |
| c3 | 9.9899 | 0.0100 | 3 | 75° |

I-e. Preparation of elliptically polarizing plate

A polyvinyl alcohol film was colored in an aqueous solution containing iodine and was then uniaxially stretched to 6 times length between rolls of different speed ratios in an aqueous solution containing boric acid, to thereby obtain a polarizer. Theprotective layer, the first birefringent layer, and the second birefringent layer were used in the combination shown in Table 5. The polarizer, the protective layer, the first birefringent layer, and the second birefringent layer were laminated through the production procedure shown in FIGS. 3 to 7, to thereby obtain each of elliptically polarizing plates A01 to A21 as shown in FIG. 1.

Table 5

| Elliptically polarizing plate | Protective layer (Angle α) | First birefringent layer (In-plane retardation) | Second birefringent layer (Angle β) | Transmittance (%) | Total thickness (μm) | Humidity resistance |
|---|---|---|---|---|---|---|
| A01 | 5 (+23°) | 2 (180 nm) | a3 (90°) | 0.10 | 184 | Poor |
| A02 | 6 (-23°) | 2 (180 nm) | a3 (90°) | 0.10 | 183 | Poor |
| A03 | 5 (+23°) | 3 (240 nm) | a3 (90°) | 0.05 | 182 | Poor |
| A04 | 6 (-23°) | 3 (240 nm) | a3 (90°) | 0.05 | 183 | Poor |
| A05 | 5 (+23°) | 4 (300 nm) | a3 (90°) | 0.08 | 186 | Poor |
| A06 | 6 (-23°) | 4 (300 nm) | a3 (90°) | 0.08 | 185 | Poor |
| A07 | 5 (+23°) | 3 (240 nm) | a2 (90°) | 0.09 | 187 | Poor |
| A08 | 6 (-23°) | 3 (240 nm) | a2 (90°) | 0.09 | 188 | Poor |
| A09 | 5 (+23°) | 3 (240 nm) | a4 (90°) | 0.10 | 180 | Poor |
| A10 | 6 (-23°) | 3 (240 nm) | a4 (90°) | 0.10 | 181 | Poor |
| A11 | 3 (+13°) | 3 (240 nm) | a3 (90°) | 0.13 | 183 | Poor |
| A12 | 4 (-13°) | 3 (240 nm) | a3 (90°) | 0.13 | 182 | Poor |
| A13 | 7 (+33°) | 3 (240 nm) | a3 (90°) | 0.14 | 184 | Poor |
| A14 | 8 (-33°) | 3 (240 nm) | a3 (90°) | 0.14 | 183 | Poor |
| A15 | 9 (-23°) | 3 (240 nm) | a3 (90°) | 0.06 | 182 | Good |
| A16 | 10 (-33°) | 3 (240 nm) | a3 (90°) | 0.06 | 184 | Good |
| A17 | 11 (+23°) | 3 (240 nm) | a3 (90°) | 0.07 | 183 | Poor |
| A18 | 12 (-23°) | 3 (240 nm) | a3 (90°) | 0.07 | 184 | Poor |
| A19 | 5 (+23°) | 3 (240 nm) | c1 (85°) | 0.07 | 184 | Poor |
| A20 | 5 (+23°) | 3 (240 nm) | c2 (80°) | 0.07 | 184 | Poor |
| A21 | 3 (+13°) | 3 (240 nm) | c3 (75°) | 0.07 | 184 | Poor |

(Example 2)

The elliptically polarizing plates A01 were superimposed to measure a contrast ratio. Table 5 reveals that the elliptically polarizing plate had a relationship represented by an expression $\beta = 2\alpha + 44°$. The elliptically polarizing plate had the minimum angle of 40° andmaximum angle of 50° for contrast 10 in all directions, and a difference between the maximum and minimum angles of 10°. The minimum angle of 40° for contrast 10 in all directions was at a preferred level in practical use. Further, the difference between the maximum and minimum angles of 10° was small and was also at a very preferred level in practical use, and thus the elliptically polarizing plate had balanced visual characteristics.

(Example 3)

The elliptically polarizing plates A21 were superimposed to measure a contrast ratio. Table 5 reveals that the elliptically polarizing plate had a relationship represented by an expression $\beta = 2\alpha + 49°$. The elliptically polarizing plate had the minimum angle of 40° andmaximum angle of 60° for contrast 10 in all directions, and a difference between the maximum and minimum angles of 20°. The minimum angle of 40° for contrast 10 in all directions was at a preferred level in practical use.

(Comparative Example 1)

The elliptically polarizing plates A11 were superimposed to measure a contrast ratio. Table 5 reveals that the elliptically polarizing plate had a relationship represented by an expression $\beta = 2\alpha + 64°$. The elliptically polarizing plate had the minimum angle of 30° and maximum angle of 50° for contrast 10 in all directions, and a difference between the maximum and minimum angles of 20°. The minimum angle of 30° for contrast 10 in all directions was not at an appropriate level in practical use.

(Comparative Example 2)

The elliptically polarizing plates A13 were superimposed to measure a contrast ratio. Table 5 reveals that the elliptically polarizing plate had a relationship represented by an expression $\beta = 2\alpha + 24°$. The elliptically polarizing plate had the minimum angle of 30° andmaximum angle of 50° for contrast 10 in all directions, and a difference between the maximum and minimum angles of 20°. The minimum angle of 30° for contrast 10 in all directions was not at an appropriate level in practical use.

(Comparative Example 3)

A commercially available polarizing plate (TEG1465DU, trade name; available from Nitto Denko Corporation; TAC protective layer/polarizer/ TAC protective layer) was cut out into a rectangular shape such that an absorption axis of a polarizer was in a direction of a long side of the rectangular shape. A film b1 in Table 3 was used as a $\lambda/2$ plate and was cut out into the same shape as the cut-out polarizing plate such that a slow axis (stretching direction) of the film b1 was at 23° with respect to the direction of the absorption axis of the polarizer. The cut-out polarizing plate and the film b1 were attached together through an adhesive with the respective long sides and short sides in the same directions, to thereby obtain a laminate. Next, a film a3 in Table 3 was used as a $\lambda/4$ plate and was cut out into the same shape as the cut-out polarizing plate such that a slow axis (stretching direction) of the film a3 was at 90° with respect to the direction of the absorption axis of the polarizer. The laminate and the film a3 were attached together through an adhesive with the respective long sides and short sides in the same directions, to thereby obtain an elliptically polarizing plate. The elliptically polarizing plate was produced through much more complex steps compared with those for the elliptically polarizing plates A01 to A21, and its production required a very long period of time. The elliptically polarizing plate had a thickness of 236 μm and a light transmittance of 0.04%.

(Comparative Example 4)

An elliptically polarizing plate was obtained in the same manner as in Comparative Example 3 except that a film b2 in Table 3 was used as a $\lambda/2$ plate. The elliptically polarizing plate was produced through much more complex steps compared with those for the elliptically polarizing plates A01 to A21, and its production required a very long period of time. The elliptically polarizing plate had a thickness of 244 μm and a light transmittance of 0.32%.

(Comparative Example 5)

An elliptically polarizing plate was obtained in the same manner as in Comparative Example 3 except that a film a6 in Table 3 was used as a λ/4 plate. The elliptically polarizing plate was produced through much more complex steps compared with those for the elliptically polarizing plates A01 to A21, and its production required a very long period of time. The elliptically polarizing plate had a thickness of 239 μm and a light transmittance of 0.50%.

(Comparative Example 6)

An elliptically polarizing plate was obtained in the same manner as in Comparative Example 3 except that a film a7 in Table 3 was used as a λ/4 plate. The elliptically polarizing plate was produced through much more complex steps compared with those for the elliptically polarizing plates A01 to A21, and its production required a very long period of time. The elliptically polarizing plate had a thickness of 250 μm and a light transmittance of 0.34%.

(Comparative Example 7)

An elliptically polarizing plate was obtained in the same manner as in Comparative Example 4 except that a film a6 in Table 3 was used as a λ/4 plate. The elliptically polarizing plate was produced through much more complex steps compared with those for the elliptically polarizing plates A01 to A21, and its production required a very long period of time. The elliptically polarizing plate had a thickness of 248μm and a light transmittance of 0.67%.

(Comparative Example 8)

An elliptically polarizing plate was obtained in the same manner as in Comparative Example 4 except that a film a7 in Table 3 was used as a λ/4 plate. The elliptically polarizing plate was produced through much more complex steps compared with those for the elliptically polarizing plates A01 to A21, and its production required a very long period of time. The elliptically polarizing plate had a thickness of 261 μm and a light transmittance of 0.50%.

The results of Example 1 reveal that the production method of the present invention allows the continuous transparent protective film having the first birefringent layer with the slow axis in an oblique direction formed and the continuous polarizer to be attached together while the respective long sides being arranged in the same direction, that is, by roll to roll, to thereby provide the elliptically polarizing plate at very high production efficiency. Further, the results of Examples 2 and 3 and Comparative Examples 1 and 2 reveal that the present invention allows optimization of the angle α between the absorption axis of the polarizer and the slow axis of the first birefringent layer, and the angle β between the absorption axis of the polarizer and the slow axis of the second birefringent layer into a relationship represented by an expression $2\alpha + 40° < \beta < 2\alpha + 50°$, to thereby provide the minimum angle of 40° for contrast 10 in all directions for the elliptically polarizing plate of the present invention and ensure a preferred level in practical use. In particular, the difference between the maximum and minimum angles was reduced to 10° in Example 2, which provided balanced visual characteristics and was at a very preferred level in practical use. In contrast, the results of Comparative Examples in which the angles α and β did not satisfy the above relationship reveal that the elliptically polarizing plates of Comparative Examples each had the minimum angle of 30° for contrast 10 in all directions, which was not at an appropriate level in practical use.

A comparison between the elliptically polarizing plates A01 to A21 of Examples of the present invention and elliptically polarizing plates of Comparative Examples 3 to 8 reveals that the elliptically polarizing plates of Examples are much thinner than the elliptically polarizing plates of Comparative Examples. Thus, the elliptically polarizing plate of the present invention may contribute to reduction in thickness of the image display. A comparison between the elliptically polarizing plates A01 to A21 of Examples and the elliptically polarizing plates of Comparative Examples 4 to 8 reveals that the elliptically polarizing plates of Examples each have a significantly low light transmittance and low light leak.

A comparison between the humidity resistance of the elliptically polarizing plates A15 and A16 and that of the elliptically polarizing plates except the elliptically polarizing plates A15 and A16 reveals that the humidity resistance (high temperature durability) is significantly improved by directly subj ecting the surface of the transparent protective film to rubbing treatment.

Many other modifications will be apparent to and be readily practiced by those skilled in the art without departing from the scope and spirit of the invention. It should therefore be understood that the scope of the appended claims is not intended to be limited by the details of the description but should rather be broadly construed.

## Claims

1. A method of producing an elliptically polarizing plate, comprising the steps of:

   subjecting a surface of a transparent protective film to alignment treatment;
   applying a liquid crystal composition onto the surface of the transparent protective film subjected to the alignment treatment;
   aligning a liquid crystal material in the liquid crystal composition in accordance with an alignment direction of the transparent protective film, so as to form a first birefringent layer;
   laminating a polarizer on a surface of the transparent protective film opposite to the surface subjected to the alignment treatment; and
   laminating a polymer filmon a surface of the first birefringent layer, so as to form a second birefringent layer, wherein the elliptically polarizing plate has a relationship represented by the following expression (1)

$$2\alpha + 40° < \beta < 2\alpha + 50° \cdots (1)$$

   in the expression (1), $\alpha$ represents an angle between an absorption axis of the polarizer and the alignment direction of the transparent protective film, and $\beta$ represents an angle between the absorption axis of the polarizer and a slow axis of the second birefringent layer.

2. A method of producing an elliptically polarizing plate according to claim 1, wherein: both the polarizer and the transparent protective film having the first birefringent layer formed thereon comprise continuous films; and long sides of the polarizer and the transparent protective film are continuously attached together in the step of laminating a polarizer.

3. A method of producing an elliptically polarizing plate according to claim 2, wherein: the polymer film forming the second birefringent layer comprises a continuous film; and long sides of the polarizer, the transparent protective film having the first birefringent layer formed thereon, and the polymer film are continuously attached together in the step of forming a second birefringent layer.

4. A method of producing an elliptically polarizing plate according to claim 1, wherein the alignment treatment is performed in one direction of +8° to +38° and -8° to -38° with respect to the absorption axis of the polarizer.

5. A method of producing an elliptically polarizing plate according to claim 1, wherein the alignment treatment is at least one selected from the group consisting of rubbing treatment, oblique deposition method, stretching treatment, optical alignment treatment, magnetic field alignment treatment, and electric field alignment treatment.

6. A method of producing an elliptically polarizing plate according to claim 5, wherein: the alignment treatment comprises rubbing treatment; and the rubbing treatment is performed directly on the surface of the transparent protective film.

7. A method of producing an elliptically polarizing plate according to claim 1, wherein the liquid crystal composition comprises at least one of a liquid crystal monomer and a liquid crystal polymer.

8. A method of producing an elliptically polarizing plate according to claim 7, wherein: the liquid crystal composition comprises at least one of a polymerizable monomer and a crosslinkable monomer; and the step of aligning a liquid crystal material further comprises at least one of polymerization treatment and crosslinking treatment.

9. A method of producing an elliptically polarizing plate according to claim 8, wherein the liquid crystal composition further comprises at least one of a polymerization initiator and a crosslinking agent.

10. A method of producing an elliptically polarizing plate according to claim 9, wherein at least one of the polymerization treatment and the crosslinking treatment is performed by one of heating and photoirradiation.

11. A method of producing an elliptically polarizing plate according to claim 1, wherein the polymer film comprises a stretched film.

**12.** A method of producing an elliptically polarizing plate according to claim 11, wherein the polymer film is stretched in a stretching direction substantially perpendicular to the absorption axis of the polarizer.

**13.** A method of producing an elliptically polarizing plate according to claim 1, wherein the transparent protective film comprises at least one polymer selected from the group consisting of a cellulose-based resin, a polyimide-based resin, a polyvinyl alcohol-based resin, and a glassy polymer.

**14.** A method of producing an elliptically polarizing plate according to claim 1, wherein the first birefringent layer and the second birefringent layer are attached together through an adhesive layer.

**15.** An elliptically polarizing plate comprising a polarizer, a first birefringent layer, and a second birefringent layer in this order, which has a relationship represented by the following expression (1)

$$2\alpha + 40° < \beta < 2\alpha + 50° \quad \cdots (1)$$

in the expression (1) , $\alpha$ represents an angle between an absorption axis of the polarizer and a slow axis of the first birefringent layer, and $\beta$ represents an angle between the absorption axis of the polarizer and a slow axis of the second birefringent layer.

**16.** An elliptically polarizing plate according to claim 15, wherein the first birefringent layer comprises a $\lambda/2$ plate.

**17.** An elliptically polarizing plate according to claim 16, wherein the second birefringent layer comprises a $\lambda/4$ plate.

**18.** An elliptically polarizing plate according to claim 17, wherein the first birefringent layer has an in-plane retardation of 180 to 300 nm.

**19.** An elliptically polarizing plate according to claim 18, wherein the second birefringent layer has an in-plane retardation of 90 to 180 nm.

**20.** An elliptically polarizing plate according to claim 19, further comprising another optical layer.

**21.** An image display comprising an elliptically polarizing plate according to claim 15.

**22.** An image display according to claim 21, wherein the elliptically polarizing plate is arranged on a viewer side.

FIG. 1

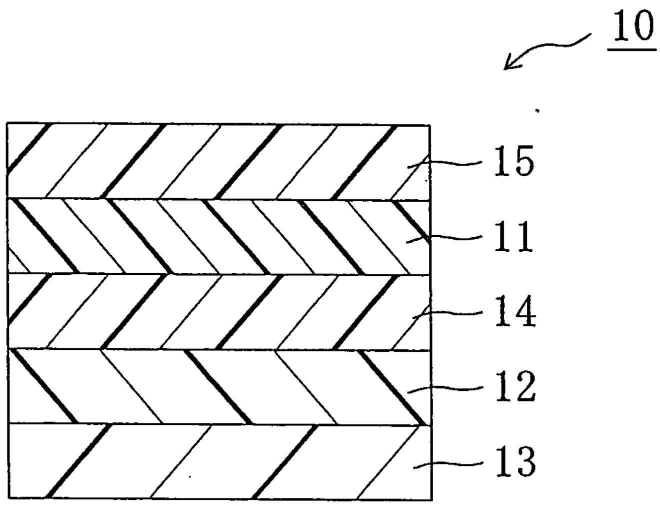

F I G. 2

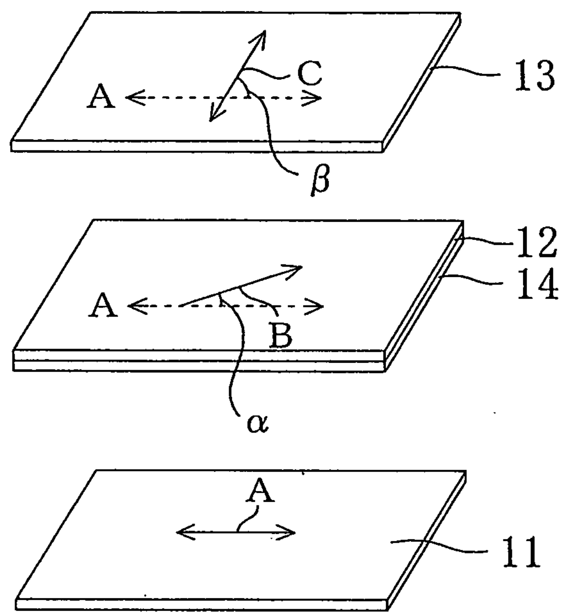

FIG. 3

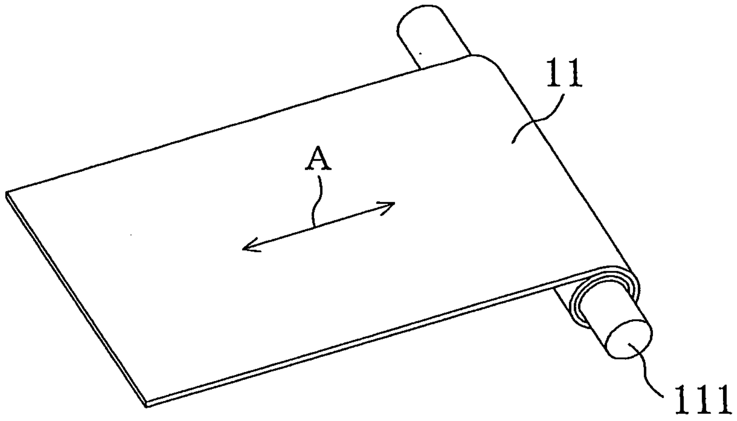


FIG. 4A

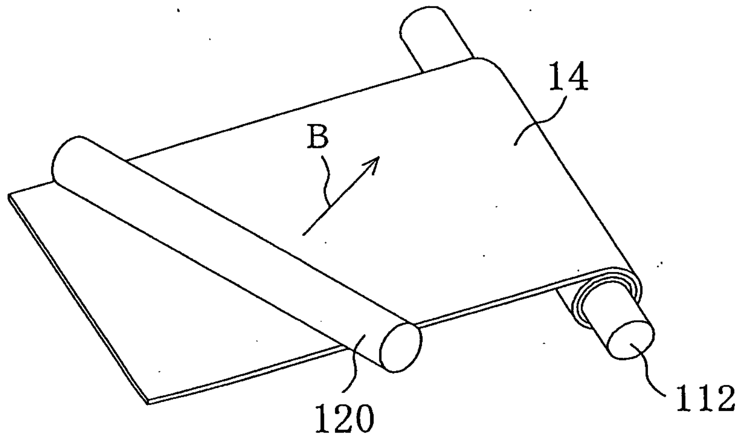


FIG. 4B

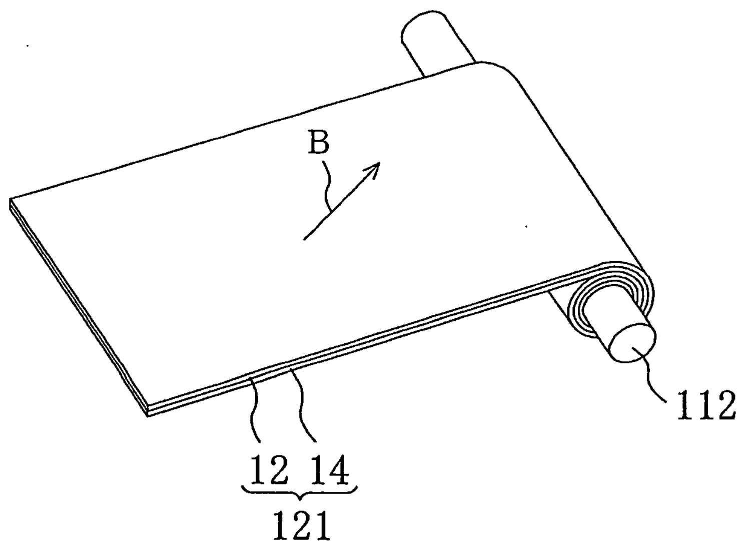

FIG. 5

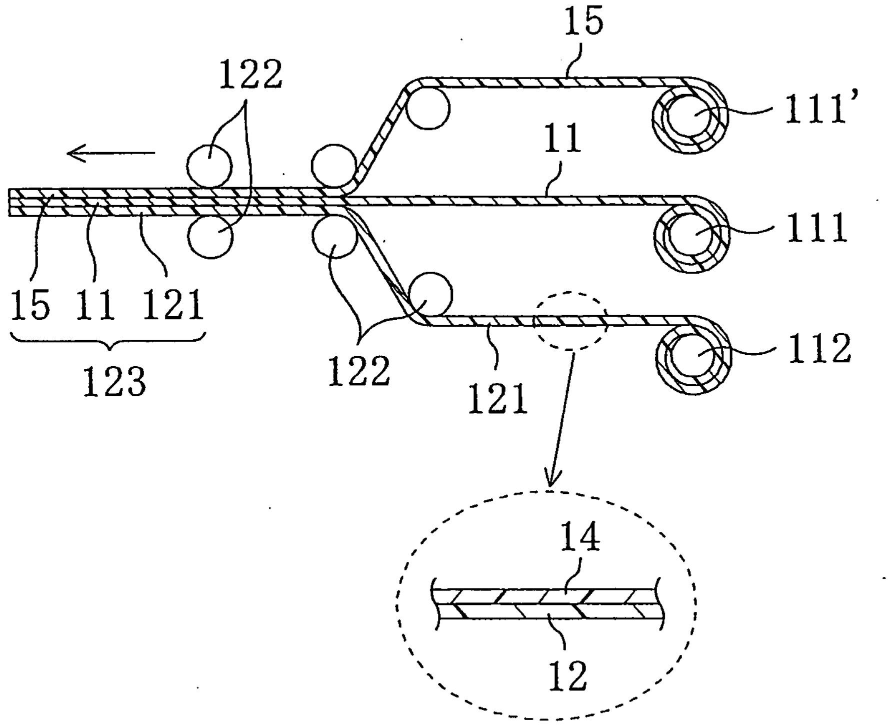
15
122
111'
11
111
15 11 121
123
122
121
112
14
12

FIG. 6

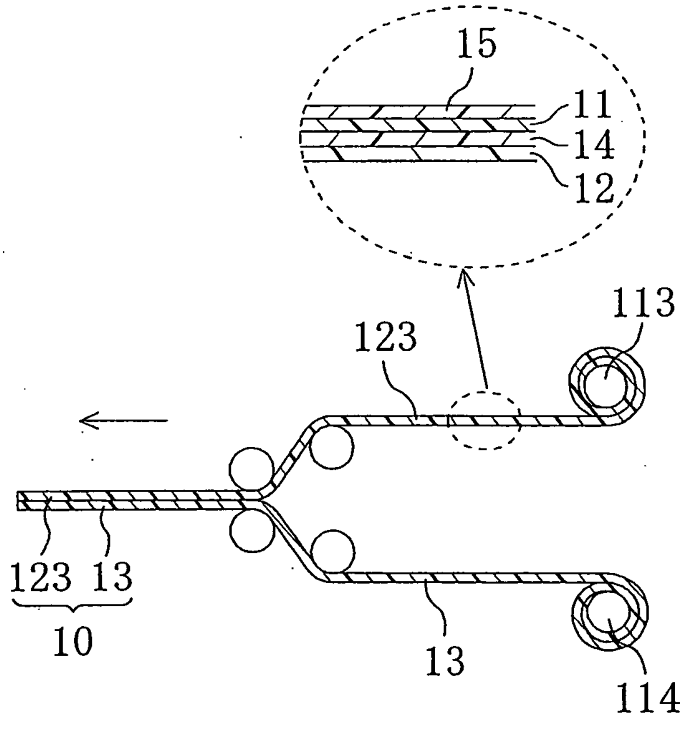
15
11
14
12
123
113
123 13
10
13
114

FIG. 7A

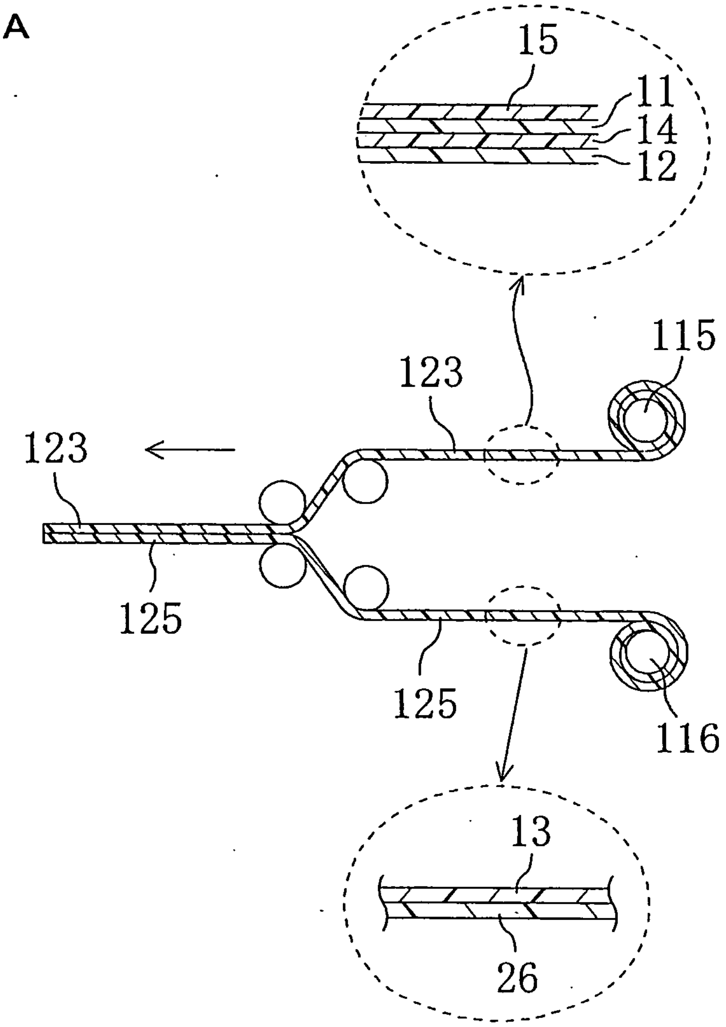


FIG. 7B

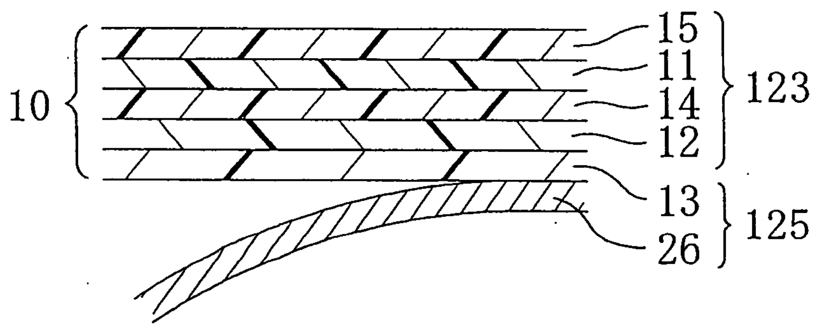


Peeling

F I G. 8